# EUROPÄISCHE PATENTSCHRIFT

(11) **EP 1 607 175 B1**
(45) Veröffentlichungstag und Bekanntmachung des Hinweises auf die Patenterteilung: **29.10.2008**
(21) Anmeldenummer: 05012803.2
(22) Anmeldetag: 14.06.2005
(51) Int. Cl.: B23Q 3/155, B23Q 3/157, B23Q 7/04, B25J 15/02

(54) **Träger für Werkzeughalter**
Carrier for a toolholder
Support pour porteur d'outil

(30) Priorität: 14.06.2004 DE 102004029045
(43) Veröffentlichungstag der Anmeldung: 21.12.2005
(73) Patentinhaber: Chiron-Werke GmbH & Co. KG, 78532 Tuttlingen (DE)
(72) Erfinder: Prust, Dirk, Dr., 78532 Tuttlingen (DE); Winkler, Hans-Henning, Dr., 78532 Tuttlingen (DE)
(74) Vertreter: Otten, Hajo

(56) Entgegenhaltungen:
- EP-A- 1 179 387
- DE-A1- 3 717 201
- DE-A1- 4 036 915
- DE-A1- 19 537 071
- US-A- 5 328 224

## Beschreibung

Die vorliegende Erfindung betrifft einen Träger für eine Längsachse aufweisende Werkzeughalter einer Werkzeugmaschine, mit zumindest einer beweglichen Backe, die um eine Schwenkachse zwischen ihrer Spreizstellung und ihrer Schließstellung verschwenkbar ist, in der sie einen in den Träger eingesetzten Werkzeughalter formschlüssig ergreift, wobei die Schwenkachse quer zur Längsachse verläuft.

Ein derartiger Träger ist aus der EP 1 179 387 A bekannt.

Derartige Träger sind ferner aus dem Stand der Technik hinreichend bekannt. Sie können entweder als Greiferhand an einem Werkzeugwechsler oder als Speicherplatz in einem Werkzeugmagazin ausgebildet sein. Sie dienen dazu, einen Werkzeughalter, der in der Regel ein genormter Steilkegel-Werkzeughalter (SK) oder Hohlschaftkegel-Werkzeughalter (HSK) ist und an seinem unteren Schaft ein Bearbeitungswerkzeug trägt, schnell zu einer Arbeitsspindel hin bzw. von ihr weg zu bewegen.

Die genormten Werkzeughalter weisen an ihrem oberen Ende einen kegelförmigen Abschnitt auf, mit dem sie in eine entsprechende Werkzeugaufnahme an der Stirnseite einer Arbeitsspindel eingesetzt werden. An den kegelförmigen oberen Abschnitt schließt sich ein verdickter zylinderförmiger Bund an, der mit einer umlaufenden Greifernut versehen ist, an dem die Werkzeughalter von den Trägern ergriffen werden. Unten an den zylinderförmigen Bund schließt sich der Schaft an, in dem das Bearbeitungswerkzeug gehalten ist.

Wie bereits erwähnt, kann der Träger als Greiferhand an einem Werkzeugwechsler ausgebildet sein, der Werkzeughalter aus einem Werkzeugmagazin entnimmt und in die Werkzeugaufnahme an der Arbeitsspindel einsetzt bzw. Werkzeughalter aus der Werkzeugaufnahme entnimmt und wieder in dem Werkzeugmagazin ablegt.

Es sind Werkzeugmaschinen bekannt, bei denen ein Werkzeugwechsler mit einer Greiferhand vorgesehen ist, so dass zunächst ein Werkzeughalter mit einem bisher im Einsatz befindlichen Bearbeitungswerkzeug aus der Werkzeugaufnahme entnommen und in einem Leerplatz in dem Werkzeugmagazin abgelegt wird, bevor ein neuer Werkzeughalter aus dem Werkzeugmagazin entnommen und in die Werkzeugaufnahme eingesetzt wird. Bei anderen, bekannten Werkzeugmaschinen sind zwei Werkzeugwechsler vorgesehen, die im Gegentakt arbeiten, so dass die eine Greiferhand bereits einen aus dem Werkzeugmagazin entnommenen Werkzeughalter zu der Arbeitsspindel hin bewegt, während die andere Greiferhand den bisher eingespannten Werkzeughalter auf der Werkzeugaufnahme entnimmt und zum Werkzeugmagazin transportiert.

Darüber hinaus sind Werkzeugmaschinen bekannt, bei denen der Werkzeugwechsel im Pick-up-Verfahren erfolgt, bei dem die Arbeitsspindel unmittelbar eine Wechselposition an dem Werkzeugmagazin anfährt und dort zunächst den eingespannten Werkzeughalter in einem Leerplatz ablegt, woraufhin das Werkzeugmagazin dann teilt, also einen neuen Werkzeughalter an die Wechselposition fährt, wo er von der Arbeitsspindel "aufgenommen" wird.

Sowohl die insoweit beschriebenen Greiferhände als auch die Speicherplätze in dem Werkzeugmagazin werden jeweils durch die eingangs erwähnten Träger gebildet, in denen die Werkzeughalter formschlüssig durch die zumindest eine bewegliche Backe gehalten werden.

Dieses formschlüssige Halten der Werkzeughalter in den Trägern ist nicht nur für die Betriebssicherheit der bekannten Werkzeugmaschinen wichtig, sondern auch für die Geschwindigkeit, mit der ein Werkzeugwechsel erfolgen kann. Je schneller sich nämlich die Speicherplätze in einem Werkzeugmagazin verfahren lassen und/oder je schneller eine Greiferhand zwischen dem Werkzeugmagazin und der Werkzeugaufnahme an der Arbeitsspindel bewegt werden kann, umso schneller lässt sich ein im Einsatz befindliches Bearbeitungswerkzeug gegen ein neues Bearbeitungswerkzeug austauschen.

Wegen der beim Teilen des Werkzeugmagazines und/oder beim Verfahren der Greiferhand auftretenden hohen Beschleunigungen ist es unablässig, dass die Werkzeughalter in den Trägern sicher ergriffen werden. Ein aus einem Träger herausfallender Werkzeughalter führt nicht nur zu einem Stillstand in dem Bearbeitungsprozess, er kann auch beträchtliche Schäden an der Werkzeugmaschine anrichten und im ungünstigsten Fall sogar zu Personenschäden führen.

Aber nicht nur ein Herausfallen der Werkzeughalter führt zu den erwähnten Schäden, auch ein sich nur teilweise aus dem Träger herauslösender Werkzeughalter führt in der Regel dazu, dass der Bearbeitungsvorgang abgebrochen werden muss, denn der Werkzeughalter wird jetzt nicht mehr lagerichtig in die Arbeitsspindel eingesetzt oder in das Magazin abgelegt.

Zu diesem Zweck weisen die meisten bekannten Träger zwei bewegliche Backen auf, die durch Zug- oder Druckfedern in ihre Schließstellung vorgespannt sind. Die Federkraft bestimmt dabei die Kraft, mit der die Werkzeughalter in dem Träger gehalten werden, denn der Formschluss ist nicht selbsthemmend, bei entsprechenden Beschleunigungen drückt der Werkzeughalter die beweglichen Backen in Richtung ihrer Spreizstellung, was nur durch die Kraft der Zug- oder Druckfedern verhindert wird. Wenn die Federn brechen oder altern, führt dies dazu, dass die Werkzeughalter nicht mehr sicher in den bekannten Trägern gehalten werden.

Aus der DE 37 17 201 A1 ist ein Träger in Form einer Greiferhand mit zwei festen Backen bekannt, die einen Werkzeughalter an seiner Greifernut erfassen und in axialer Richtung halten. Auf den beiden festen Backen sind schwenkbar zwei bewegliche Backen angeordnet, die um zur Längsachse des Werkzeughalters parallele Achsen über ein zwangsgesteuertes Getriebe geöffnet und geschlossen werden. Das Getriebe wird über die Axialbewegung eines Betätigungsorganes angetrieben und durch eine Druckfeder in seine Schließstellung vorgespannt. In der Spreizstellung der beweglichen Backen kann der Werkzeughalter quer zu seiner Längsrichtung aus den festen Backen seitlich herausgezogen werden.

Auch bei diesem Träger ist es von Nachteil, dass bei einem Nachlassen der Spannkraft der Feder die Schließkraft und damit die Haltekraft zurückgehen, bzw. bei einem Bruch der Feder völlig verloren gehen. Was das Schließen der beweglichen Backen angeht, ist der bekannte Träger auf die Zuverlässigkeit der Druckfeder angewiesen.

Darüber hinaus reicht die Federkraft oft auch nicht aus, um die beweglichen Backen zu schließen. Dies geschieht insbesondere dann, wenn das Getriebe durch in die Greiferhand gelangte Späne verklemmt ist. Beim Verfahren der Greiferhand kann in diesen Fällen das Werkzeug aus der Greiferhand herausfallen und die erwähnten Schäden an der Werkzeugmaschine verursachen.

Ein aus der DE 40 36 915 A1 bekannter Träger vermeidet diese Nachteile bei einem Träger, wie er aus der DE 37 17 201 A1 bekannt ist, dadurch, dass das Getriebe nicht über eine Druckfeder sondern über einen Kupplungsmechanismus betätigt wird, der die Greiferhand vorübergehend mit einem raumfesten Anschlag verbindet. Durch Verfahren der angekuppelten Greiferhand gegenüber dem raumfesten Anschlag wird das Getriebe betätigt, wodurch die beweglichen Backen zwischen ihrer Spreizstellung und ihrer Schließstellung verschwenkt werden.

Obwohl dieser Träger die Nachteile vermeidet, die mit über Federn vorgespannten Backen verbunden sind, ist er doch konstruktiv sehr kompliziert aufgebaut, wobei wegen des Ankuppelns und der damit verbundenen Maßnahmen der Werkzeugwechsel sehr langsam vonstatten geht.

Aber auch die DE 195 37 071 A1 beschreibt einen Träger in Form einer Greiferhand, die an einem Werkzeugwechsler angeordnet ist, der Werkzeughalter zwischen einer Werkzeugaufnahme an einer Arbeitsspindel und einem Werkzeugmagazin überführt. Dieser Träger weist zwei bewegliche Backen auf, die um eine parallel zur Längsachse der Werkzeughalter verlaufende Schwenkachse zwischen einer Spreizstellung und einer Schließstellung verschwenkbar sind. Statt der oben beschriebenen beiden festen Backen ist ein Klemmstein vorgesehen, der nach einem komplizierten Werkzeugwechselverfahren den Werkzeughalter in axialer Richtung fixiert, wenn er mit seinem Kegel bereits in eine Werkzeugaufnahme eingesetzt ist. Die beiden beweglichen Backen werden über einen pneumatischen, hydraulischen oder elektromechanischen Antrieb verschwenkt.

Bei diesem Träger ist von Nachteil, dass er zum einen konstruktiv sehr aufwendig ist und zum anderen ein hohes Gewicht aufweist, so dass er wegen der zu bewegenden schweren Masse nur einen langsamen Werkzeugwechsel ermöglicht. Ferner ist das Verfahren wegen des Zusammenwirkens von Klemmstein und Werkzeugaufnahme relativ kompliziert und muss über Sensoren überprüft werden, so dass auch hierdurch der Werkzeugwechsel langsam erfolgen kann.

Die DE 199 19 446 A1 beschreibt einen Träger, der als Magazinplatz in einem Werkzeugmagazin ausgebildet ist. Bei diesem bekannten Träger wird der Werkzeughalter quer zwischen zwei feste Backen eingeführt und dann in eine an den Backen vorgesehene Vertiefung abgesenkt, wo er durch sein Eigengewicht gehalten wird. Der Werkzeugwechsel erfolgt hier im Pick-up-Verfahren, die Arbeitsspindel fährt einen auszuwechselnden Werkzeughalter seitlich quer in den Träger ein, der dabei mit seinen festen Backen an gegenüberliegenden Seiten in die Greifernut des Werkzeughalters eingreift. Wenn der Werkzeughalter quer vollständig eingeschoben ist, wird er abgesenkt, so dass er in der Vertiefung zu liegen kommt.

Diese Konstruktion ist zwar sehr einfach, ermöglicht jedoch kein schnelles Verfahren des Trägers, da der Werkzeughalter lediglich durch sein Eigengewicht gehalten wird.

Bei dem aus der eingangs erwähnten EP 1 179 387 A bekannten Träger sind ebenfalls zwei feste Backen vorgesehen, in die ein Werkzeughalter quer eingeführt werden kann. Ferner ist eine C-förmige Klaue vorgesehen, die um eine senkrecht zur Einführrichtung angeordnete Schwenkachse von oben auf den Träger zu geschwenkt wird, um den auf den Träger zu einen größer werdenden Durchmesser aufweisenden Werkzeughalter zu umgreifen. Zum Öffnen des Trägers wird die Klaue über einen Arbeitszylinder aktiv nach oben geschwenkt, das Schließen erfolgt über Federspannung.

Auch hier ist neben dem konstruktiven Aufwand von Nachteil, dass die Klaue bei starker Beschleunigung gegen die Federkraft durch den sich nach oben verjüngenden Werkzeughalter nach oben gedrückt wird, so dass der Träger den Werkzeughalter unbeabsichtigt freigeben kann.

Die US 5,328,224 beschreibt eine Roboterhand mit einem feststehenden Finger, einem auf den feststehenden Finger zu und von diesem weg bewegbaren beweglichen Finger sowie einem Daumen, der auf den festen Finger zugeschwenkt werden kann und mit diesem in Anlage gelangt. Der Daumen ist ferner in derselben Richtung wie der bewegliche Finger schwenkbar, so dass er auch zwischen die beiden Finger bewegt werden kann.

Vor diesem Hintergrund liegt der vorliegenden Erfindung die Aufgabe zugrunde, den eingangs erwähnten Träger so weiterzubilden, dass bei konstruktiv einfachem Aufbau die Betriebssicherheit verbessert und ein schneller Werkzeugwechsel ermöglicht wird.

Bei dem bekannten Träger wird diese Aufgabe erfindungsgemäß dadurch gelöst, dass die Schwenkachse schräg zu einer Einführrichtung verläuft, längs derer der Werkzeughalter in den Träger eingeschoben wird, derart, dass die zumindest eine bewegliche Backe in der Spreizstellung mit ihren Spitzen auf den Träger zu geschwenkt ist.

Die der Erfindung zugrunde liegende Aufgabe wird auf diese Weise vollkommen gelöst.

Die Erfinder der vorliegenden Anmeldung haben nämlich erkannt, dass es nicht erforderlich ist, die Schwenkachse der beweglichen Backe parallel zur Längsachse des Werkzeughalters auszubilden, sondern dass die Schwenkachse auch quer hierzu verlaufen kann. Dies bedeutet jedoch, dass sich die bewegliche Backe nicht mehr in der Ebene des Formschlusses bewegt, wie dies im Stand der Technik vorgesehen ist, sondern dass die bewegliche Backe zum Öffnen aus der Ebene heraus und zum Schließen wieder in die Ebene hinein geschwenkt wird.

Dabei ist von Vorteil, dass sich die Spitze der beweglichen Backe beim Herausschwenken aus der Ebene des Formschlusses gleichzeitig von dem Werkzeughalter bzw. dessen Außenkontur entfernt und diesen dadurch automatisch freigibt; die Schwenkachse verläuft bei dieser Anordnung nämlich auch schräg zu der Außenkontur des Werkzeughalters. Mit dieser Maßnahme kann der neue Träger also konstruktiv sehr einfach aufgebaut sein, an der Spitze der beweglichen Backe muss nicht zusätzlich ein Schnappmechanismus oder ähnliches vorgesehen sein, wie es bei einer quer zu der Einführrichtung angeordneten Schwenkachse gegebenenfalls erforderlich sein kann.

Weil die bewegliche Backe jetzt von unten in den Formschluss geschwenkt wird, entsteht ein echter Formschluss. Wenn der Werkzeughalter aus dem geschlossenen Träger seitlich herausgezogen wird, entsteht keine Kraftkomponente, die die bewegliche Backe in ihre Spreizstellung bewegen könnte.

Die Haltekraft hängt damit nicht von einer Federkraft oder einem gegebenenfalls selbsthemmenden Getriebe ab, sondern nur vom erfolgten Formschluss. Die Haltekraft kann auch nicht mehr "überdrückt" werden, denn bei einem schnellen Bewegen des Trägers drückt der Werkzeughalter aufgrund der Fliehkraft die bewegliche Backe nicht um ihre Schwenkachse herum sondern belastet sie quer zur Schwenkachse, wohin die bewegliche Backe jedoch nicht ausweichen kann.

Der neue Träger kann daher sehr schnell bewegt werden, wobei er eine sehr einfache Konstruktion aufweist. Die Betätigung der beweglichen Backe kann dabei auf beliebige Art und Weise erfolgen.

In einer Weiterbildung ist es bevorzugt, wenn die zumindest eine bewegliche Backe in der Schließstellung mit ihrer Spitze auf einer im Wesentlichen in Richtung der Längsachse verlaufenden Außenfläche des Werkzeughalters aufliegt.

Hier ist von Vorteil, dass die bewegliche Backe den Werkzeughalter selbsthemmend ergreift. Da die Außenfläche des Werkzeughalters, auf der die bewegliche Backe aufliegt, im Wesentlichen senkrecht verläuft, wird die bewegliche Backe nicht um ihre Längsachse nach unten gedrückt, wenn der Werkzeughalter quer zu seiner Außenfläche beschleunigt wird. Wäre die Außenfläche nach innen geneigt, so würde der Werkzeughalter bei einer Beschleunigung aus dem Träger heraus nicht nur eine Kraft in der Ebene des Formschlusses sondern auch eine Kraftkomponente in Richtung seiner Längsachse auf die bewegliche Backe ausüben, wodurch diese dann in ihre Spreizstellung überführt würde, wenn die Reibkraft, mit der die Spitze der beweglichen Backe auf der Außenfläche des Werkzeughalters haftet, überwunden würde.

Diese Maßnahme sorgt also dafür, dass der Träger den Werkzeughalter mit sehr hoher Kraft hält, so dass der Träger sehr stark beschleunigt und abgebremst werden kann, ohne dass der Werkzeughalter aus dem Träger herausgeschleudert wird. Dies ermöglicht folglich einen sehr sicheren und schnellen Werkzeugwechsel. Diese Maßnahme ist aber auch konstruktiv von Vorteil, denn es kann eine sowieso verwendete Außenfläche beispielsweise an dem verdickten Bund des Werkzeughalters für den Formschluss verwendet werden.

Weiter ist es bevorzugt, wenn die zumindest eine bewegliche Backe federbelastet in ihre Schließstellung vorgespannt ist.

Bei dieser Maßnahme ist von Vorteil, dass die bewegliche Backe sehr einfach zu betätigen ist, sie muss nämlich nur heruntergedrückt werden, um von ihrer Schließstellung in ihre Spreizstellung überführt zu werden. Dies kann durch Heranfahren an einen raumfesten Anschlag erfolgen, oder durch einen fremdkraftbetätigten Stößel, der in der Übergabeposition zum Werkzeugmagazin oder an der Arbeitsspindel vorgesehen ist. Auch konstruktiv ist der neue Träger sehr einfach aufgebaut, wobei die Federkraft nicht die Haltekraft bestimmt, sondern nur die Schließkraft, also die Kraft, mit der die bewegliche Backe von der Spreizstellung in die Schließstellung überführt wird. Wenn die Feder die bewegliche Backe in Schließstellung gebracht hat, muss sie nur die gegebenenfalls sehr geringe Kraftkomponente aufwenden, die ein beschleunigter Werkzeughalter in Richtung seiner Längsachse auf die bewegliche Backe ausübt. Durch eine entsprechende Auslegung der Außenkontur, an der die Spitze anliegt, kann diese Kraftkomponente jedoch sehr gering sein oder gar nicht auftreten.

Weiter ist es bevorzugt, wenn die zumindest eine bewegliche Backe bei in den Träger eingesetztem Werkzeughalter in Längsrichtung über eine Außenkontur des Werkzeughalters übersteht.

Diese Maßnahme ermöglicht ein sehr einfaches Öffnen des Trägers, die Arbeitsspindel selbst öffnet nämlich die Backe, wenn sie von oben auf den Werkzeughalter auffährt, um mit ihrer Stirnseite in Anlage mit einer Planfläche des Werkzeughalters zu gelangen. Diese Maßnahme ist dabei sowohl für Werkzeugwechsel im Pick-up-Verfahren als auch für Werkzeugwechsel mit Hilfe von Greiferhänden zu verwenden. Wenn der Träger an einer Greiferhand vorgesehen ist, so wird eine entsprechende Anlagefläche an der Arbeitsspindel auch im Werkzeugmagazin vorgesehen, so dass beim Einfahren der Greiferhand in das Werkzeugmagazin die bewegliche Backe automatisch in ihre Spreizstellung überführt wird.

Allgemein ist es noch bevorzugt, wenn der Träger zwei eine Öffnung aufspannende, feststehende Backen aufweist, von denen ein durch die Öffnung seitlich in den Träger eingesetzter Werkzeughalter in Längsrichtung formschlüssig gehalten ist.

Diese Maßnahme ist an sich bekannt, sie bietet den Vorteil, dass der Werkzeughalter nach dem Überführen der zumindest einen beweglichen Backe in die Spreizstellung nicht herausfallen kann, sofern der Träger danach nicht oder nicht schnell bewegt wird.

Weiter ist es bevorzugt, wenn die zumindest eine bewegliche Backe eine in Längsrichtung nach oben weisende Fläche aufweist, die auf den Träger zu geneigt nach unten verläuft.

Hier ist von Vorteil, dass beim Einsetzen eines von der Arbeitsspindel gehaltenen Werkzeughalters in den Träger die Arbeitsspindel, die seitlich auf den Träger zu fährt, dabei die bewegliche Backe allmählich nach unten drückt, so dass diese in ihre Spreizstellung verschwenkt. Mit anderen Worten, beim seitlichen Einfahren des Werkzeughalters in den Träger, wie es beispielsweise beim Werkzeugwechsel im Pick-up-Betrieb erfolgt, wird die zumindest eine bewegliche Backe allmählich nach unten gedrückt, so dass die bewegliche Backe in Spreizstellung gelangt und der Werkzeughalter vollständig in den Träger eingeschoben werden kann. Wenn die Arbeitsspindel danach den Werkzeughalter ausstößt und nach oben von dem Träger weg fährt, gibt sie die bewegliche Backe wieder frei, die durch die Kraft der Druck- oder Zugfeder dann in ihre Schließstellung verschwenkt.

Vor diesem Hintergrund betrifft die vorliegende Erfindung auch ein Verfahren zum Wechseln von Werkzeughaltern in Trägern einer Werkzeugmaschine, wobei jeder Träger mit zumindest einer beweglichen Backe versehen ist, die um eine Schwenkachse zwischen ihrer Spreizstellung und ihrer Schließstellung verschwenkbar ist, in der sie einen in den Träger längs einer Einführrichtung eingesetzten Werkzeughalter formschlüssig ergreift, **dadurch gekennzeichnet, daß** die Schwenkachse schräg zu der Einführrichtung verläuft, bei dem die Arbeitsspindel an ihrer Stirnseite auf die zumindest eine bewegliche Backe drückt und diese in deren Spreizstellung verschwenkt, wobei die backe mit ihren Spitzen auf den Träger zu geschwenkt wird.

Diese Maßnahme fasst die oben erwähnten Vorteile zusammen; durch das relative Verfahren zwischen Arbeitsspindel und Träger wird automatisch die bewegliche Backe in ihre Spreizstellung überführt, so dass ein Werkzeughalter von der Arbeitsspindel in den Träger abgelegt oder aus dem Träger entnommen werden kann. Der Träger kann dabei entweder als Speicherplatz in einem Werkzeugmagazin dienen, so dass der Werkzeugwechsel im Pick-up-Betrieb erfolgt, oder an einer Greiferhand eines Werkzeug wechslers ausgebildet sein, wobei dann die Greiferhand mit Hilfe der Werkzeugwechselvorrichtung unter die Arbeitsspindel gefahren wird.

Weitere Vorteile ergeben sich aus der Beschreibung und der beigefügten Zeichnung.

Es versteht sich, dass die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: in einer schematischen Vorderansicht eine Werkzeugmaschine, in der die neuen Träger verwendet werden;
- Fig. 2: in einer schematischen Seitenansicht einen HSK Werkzeughalter, der in den neuen Träger eingesetzt werden kann;
- Fig. 3: eine schematische Draufsicht auf den neuen Werkzeughalter mit eingelegtem und verriegeltem Werkzeughalter;
- Fig. 4: eine Darstellung wie Fig. 3, jedoch mit freigegebenem Werkzeughalter, also mit in Spreizstellung befindlichen beweglichen Backen;
- Fig. 5: eine schematische Vorderansicht des Trägers aus Fig. 3; und
- Fig. 6: eine schematische Vorderansicht des Trägers aus Fig. 4.

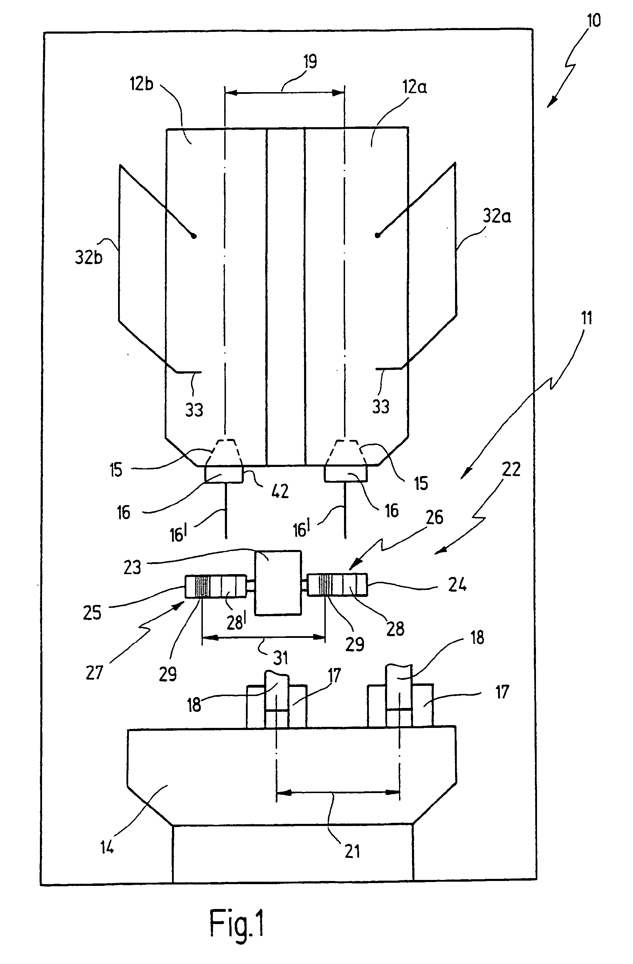

In Fig. 1 ist mit 10 schematisch in Vorderansicht eine Werkzeugmaschine dargestellt, die einen Arbeitsraum 11 aufweist, in dem zwei Arbeitsspindeln 12a und 12b relativ zu einem Werkstücktisch 14 verfahrbar sind.

Jede Arbeitsspindel 12a, 12b weist eine übliche Werkzeugaufnahme 15 auf, in die jeweils ein Werkzeughalter 16 eingespannt ist, der ein schematisch angedeutetes Bearbeitungswerkzeug 16' trägt.

Mit Hilfe der Werkzeuge 16' werden in zwei Vorrichtungen 17 auf dem Werkstücktisch 14 eingespannte Werkstücke 18 bearbeitet.

Die Arbeitsspindeln 12a und 12b weisen zueinander einen bei 19 angedeuteten Abstand auf, der einem bei 21 angedeuteten Abstand zwischen den Vorrichtungen 17 und damit den Werkstücken 18 entspricht. Auf diese Weise ist es möglich, mit den Arbeitsspindeln 12a und 12b synchron die Werkstücke 18 zu bearbeiten.

In dem Arbeitsraum 11 ist bei 22 ein Magazin für Werkzeuge 16' angedeutet, das üblicherweise hinter den Arbeitsspindeln 12a und 12b angeordnet ist und lediglich zum Werkzeugwechsel in den Arbeitsraum 11 hineingefahren wird.

Das Magazin 22 umfasst ein bei 23 angedeutetes Kettengehäuse, über das seitlich ein erster Träger 24 nach rechts und ein zweiter Träger 25 nach links übersteht. Der Träger 24 befindet sich in einer ersten Übergabeposition 26 und der Träger 25 in einer zweiten Übergabeposition 27. Der Träger 24 ist zum Werkzeugwechsel an der Arbeitsspindel 12a und der Träger 25 zum Werkzeugwechsel an der Arbeitsspindel 12b vorgesehen.

Beide Werkzeugträger, 24, 25 weisen einen leeren Speicherplatz 28 bzw. 28' auf, in den das in den Arbeitsspindeln 12a, 12b eingespannte Werkzeug 16' mit ihrem jeweiligen Werkzeughalter 16 abgelegt werden kann. Ferner ist in beiden Trägern 24, 25 ein weiterer Speicherplatz 29, 29' vorgesehen, der mit einem Werkzeughalter und darin eingespanntem Werkzeug bestückt ist, das als nächstes in die Arbeitsspindel 12a, 12b eingewechselt werden soll.

Die Speicherplätze 28 und 28' bzw. die Speicherplätze 29 und 29' weisen zueinander einen bei 31 angedeuteten Abstand auf, der dem Abstand 19 zwischen den Arbeitsspindeln 12a und 12b entspricht.

Auf diese Weise ist es möglich, zunächst synchron die Werkzeuge 16' in ihren Werkzeughaltern 16 in den Speicherplätzen 28, 28' abzulegen und dann Werkzeughalter 16 aus den Speicherplätzen 29, 29' zu entnehmen. Ein derartiger Werkzeugwechsel wird auch als Pick-up-Betrieb bezeichnet.

Alternativ ist es bei der Werkzeugmaschine 10 aus Fig. 1 auch möglich, die Werkzeughalter 16 mit Hilfe von Werkzeugwechselvorrichtungen 32a, 32b zwischen dem Werkzeugmagazin 22 und der jeweiligen Werkzeugaufnahme 15 zu überführen. Zu diesem Zweck können die in Fig. 1 lediglich schematisch angedeuteten Werkzeugwechselvorrichtungen 32a, 32b, die an ihrem unteren freien Ende jeweils einen Träger 33 für Werkzeughalter 16 tragen, von der in Fig. 1 gezeigten Ruheposition in eine Arbeitsposition geschwenkt werden, in der sich die Träger 33 entweder an dem Werkzeugmagazin 22 oder unter der jeweiligen Werkzeugaufnahme 15 befinden. Die Träger 33 entnehmen dabei einen Werkzeughalter 16 entweder aus dem Werkzeugmagazin 22 oder der Werkzeugaufnahme 15 und transportieren diesen Werkzeughalter dann zu der Werkzeugaufnahme 15 bzw. dem Werkzeugmagazin 22. Es ist auch bekannt, jeder Arbeitsspindel 12a, 12b zwei Werkzeugwechselvorrichtungen 32a, 32b zuzuordnen, so dass der Werkzeughalter 16 im Gegentaktbetrieb gewechselt werden kann.

Die Träger 33 sowie die Träger 24 und 25 sind dabei vergleichbar aufgebaut, sie ergreifen mit einer beweglichen Backe einen aufgenommenen Werkzeughalter 16 formschlüssig, so dass er beim schnellen Verfahren entweder der Werkzeugwechselvorrichtung 32a, 32b oder des Werkzeugmagazins 22 nicht aus dem jeweiligen Träger 24, 25, 33 herausgeschleudert werden kann.

Wenn der neue Träger als Träger 33 oder auch Greiferhand an den Werkzeugwechslern 32a, 32b ausgebildet ist, sind die entsprechenden Magazinplätze 28, 29 in dem Werkzeugmagazin 22 selbstverständlich nicht durch vergleichbare Träger ausgebildet, sondern durch Innenkonus-Halter, die analog zu der Werkzeugaufnahme 15 ausgebildet sind. Wenn der Träger 33 jetzt von unten unter die Werkzeugaufnahme 15 oder einen entsprechenden Speicherplatz in dem Werkzeugmagazin 22 gefahren wird, gibt er dabei automatisch in noch zu beschreibender Weise den bis dato formschlüssig gehaltenen Werkzeughalter frei, so dass er in die Arbeitsspindel 12a, 12b eingespannt oder im Maschinenmagazin 22 abgelegt werden kann. Der Träger 33 kann danach ohne weitere Maßnahmen weggefahren werden.

Wenn dagegen die Werkzeugmaschine 10 im Pick-up-Werkzeugwechselbetrieb arbeitet, sind die Werkzeugwechselvorrichtungen 32a, 32b nicht vorgesehen, die Träger 24, 25 sind dann vielmehr so ausgebildet, dass sie die Werkzeughalter 16 formschlüssig halten und den Formschluss freigeben, wenn die Arbeitsspindeln 12a, 12b von oben auf die Träger 24, 25 aufgefahren werden.

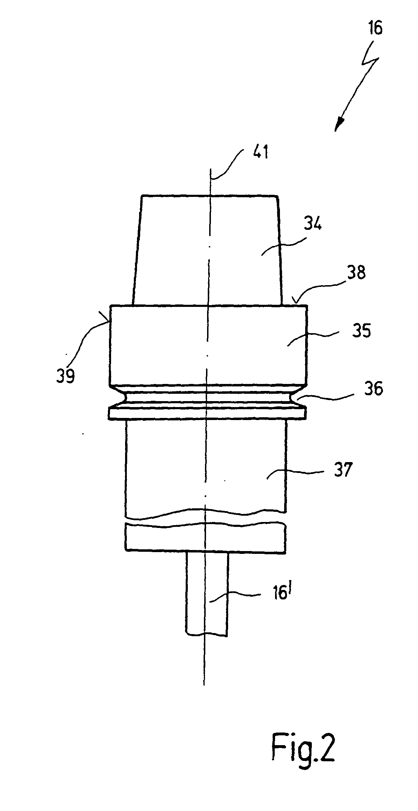

In Fig. 2 ist schematisch ein Werkzeughalter 16 gezeigt, wie er in der Werkzeugmaschine 10 aus Fig. 1 verwendet wird.

Der Werkzeughalter 16 ist ein HSK-Werkzeughalter mit einem Hohlschaftkegel 34, der in seiner Außenkontur an die Werkzeugaufnahme 15 angepasst ist.

Unten an den Hohlschaftkegel 34 schließt sich ein verdickter Bund 35 an, an dem unten eine umlaufende Greifernut 36 vorgesehen ist, in die die Träger 24, 25 oder 33 in noch zu beschreibender Weise eingreifen.

Unten an den verdickten Bund 35 schließt sich ein Schaft 37 an, in den in an sich bekannter Weise Bearbeitungswerkzeuge 16' eingespannt sind.

Der verdickte Bund 35 weist eine auf den Kegelhohlschaft zu weisende ringförmige Planfläche 38 auf, und ist von einer zylindrischen Außenfläche 39 umgeben, die symmetrisch zu einer bei 41 angedeuteten Längsachse des Werkzeughalters 16 verläuft.

Beim Einspannen des Werkzeughalters 16 in die Werkzeugaufnahme 15 durch ein in den Figuren nicht dargestelltes Spannsystem, das in den Arbeitsspindeln 12a, 12b vorgesehen ist, gelangt die Planfläche 38 mit einer in Fig. 1 bei 42 angedeuteten Stirnseite der Arbeitsspindeln 12a, 12b in Anlage, wie dies im Stand der Technik allgemein bekannt ist.

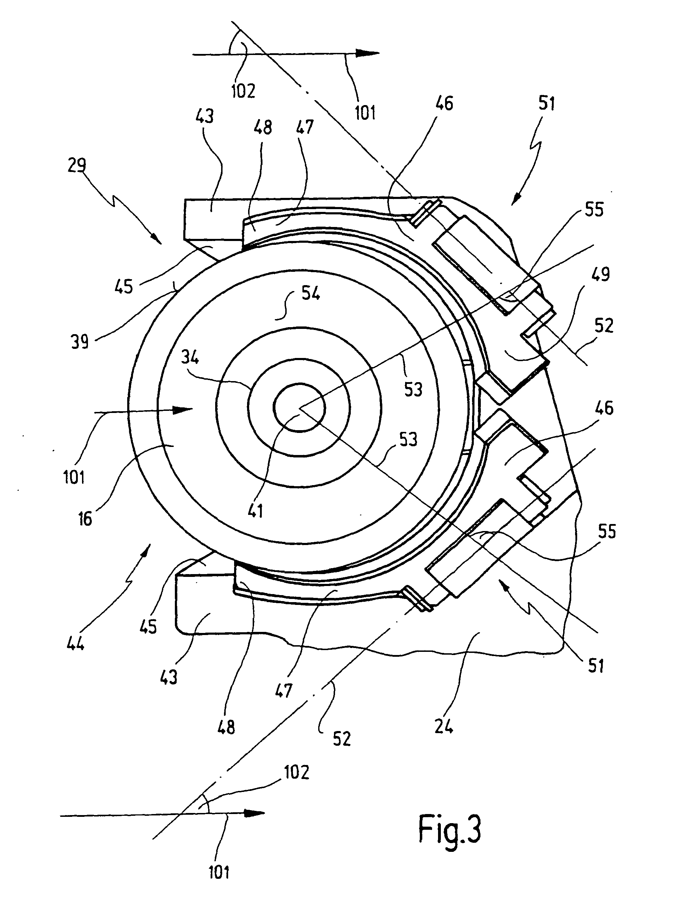

In Fig. 3 ist in einer schematischen Draufsicht der Träger 24 aus Fig. 1 im Bereich des Speicherplatzes 29 gezeigt, wo der Werkzeugträger 16 eingespannt ist; der freie Speicherplatz 28 ist vergleichbar aufgebaut, jedoch nicht dargestellt. Der Träger 24 umfasst zwei feststehende Backen 43, die zwischen sich eine Öffnung 44 aufspannen. Die Backen 43 greifen mit ihren inneren Seiten 45 in die aus Fig. 2 bekannte Greifernut an dem Werkzeughalter 16 ein und halten ihn in axialer Richtung formschlüssig fest.

An dem Träger 24 sind ferner zwei bewegliche Backen 46 angeordnet, die ein gebogenes vorderes Ende 47 aufweisen, dessen jeweilige Spitze 48 in Anlage mit der aus Fig. 2 bekannten Außenfläche 39 des Werkzeughalters 16 ist.

An ihrem hinteren Ende 49 sind die beweglichen Backen 46 jeweils beweglich an einem Gelenk 51 gelagert, dessen Schwenkachse 52 in der Zeichnungsebene und damit quer zu der Längsachse 41 des Werkzeugträgers 39 verläuft.

Die beiden Schwenkachsen 52 verlaufen dabei schräg zu einer bei 101 angedeuteten Einführrichtung, längs derer der Werkzeughalter 16 in die U-förmig ausgebildeten feststehenden Backen 43 eingeschoben wird. Diese Einführrichtung 101 schneidet die Schwenkachsen 52 unter einem Winkel 102, der deutlich kleiner als 90° ist und hier bei ca. 45° liegt. Die beweglichen Backen 46 schwenken dadurch nicht nur nach unten, also aus der Zeichnungsebene heraus, ihre Spitzen 48 bewegen sich dabei auch radial nach außen von der Außenfläche 39 weg.

Die beweglichen Backen 46 geben den Werkzeughalter 16 also dann aus dem Formschluss frei, wenn sie mit ihren Spitzen 48 auf die feststehenden Backen 43, also den Träger 24 zu, bewegt wurden.

Mit 53 ist ein von der Längsachse 41 ausgehender Radialstrahl gezeigt, der beispielsweise bei 54 einen gedachten Kreis um die Längsachse 41 beschreibt. Der Radialstrahl 53 schneidet nun die Längsachsen 52 nicht unter einem rechten Winkel, so dass die Schwenkachsen 52 nicht nur schräg zu der Einführrichtung 101 sondern hier auch noch schräg zu dem gedachten Kreis 54 liegen. Die Anordnung ist dabei so getroffen, dass der Radialstrahl 53 mit der jeweiligen Schwenkachse 52 einen von dem jeweiligen vorderen Ende 47 abgelegenen Winkel 55 bilden, der größer als 90° ist.

Auf diese Weise bewegt sich die Spitze 48 von der Außenfläche 39 weg, wenn die beweglichen Backen 46 aus der in Fig. 3 gezeigten Ebene des Formschlusses nach unten herausgeschwenkt werden.

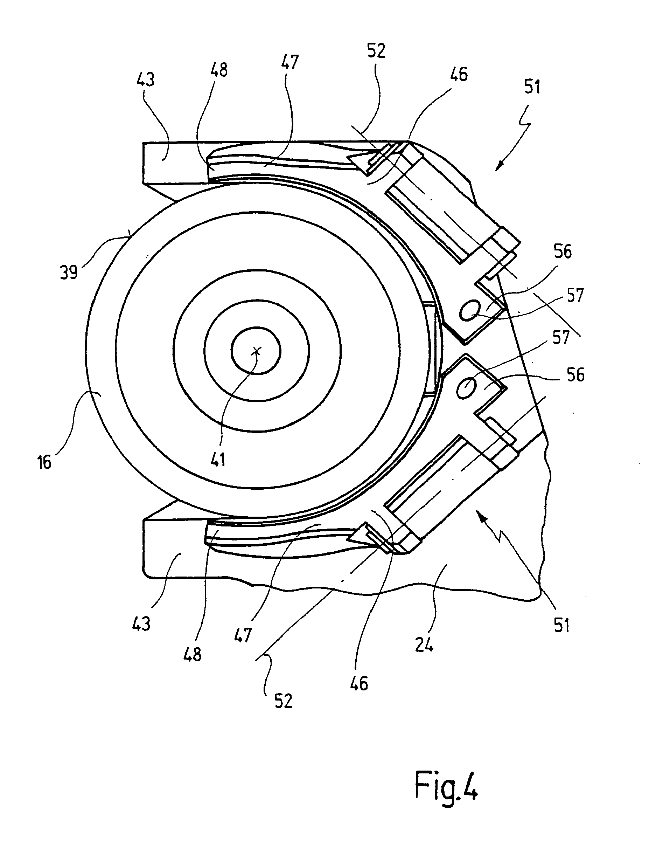

Während die Backen 46 in Fig. 3 in ihrer Schließstellung gezeigt sind, zeigt die Fig. 4 die Backen 46 in ihrer Spreizstellung, in der sie also nach unten aus der Ebene des Formschlusses herausgeschwenkt wurden.

In Fig. 4 ist zu erkennen, dass die Spitzen 48 so weit von der Außenfläche 39 freigekommen sind, dass der Werkzeughalter 16 zwischen den feststehenden Backen 43 in Fig. 4 nach links herausgezogen werden kann.

Aus der in Fig. 4 gezeigten Spreizstellung, in der die Backen 46 also auf den Träger 24 heruntergedrückt wurden, werden die Backen 46 durch eine unter einem Hebel 56 angeordnete Druckfeder 57 wieder nach oben in ihre Schließstellung gemäß Fig. 3 gedrückt. Die Druckfeder 57 liegt auf derselben Seite des Gelenkes 51 wie das vordere Ende 47. Die Druckfeder 57 sowie der einstückig an der beweglichen Backe 46 ausgebildete Hebel 56 dienen lediglich dazu, die beweglichen Backen 46 in ihre in Fig. 3 gezeigte Schließstellung vorzuspannen, die Haltekraft, mit der der Werkzeughalter 16 in dem Träger 24 gehalten wird, wird lediglich durch den Formschluss der Spitzen 48 mit der zylindrischen Außenfläche 39 bewirkt. Wenn der Werkzeughalter 16 in der in Fig. 3 gezeigten Schließstellung der Backen 46 nach links herausgezogen werden soll, so wird dies durch den genannten Formschluss verhindert. Dabei wird auf die Backen 46 keine Kraftkomponente ausgeübt, die die Backen 46 auf den Träger 24 zudrücken würde, denn die zylindrische Außenfläche 39 läuft zentrisch zu der Längsachse 41.

Die Backen 46 werden übrigens dadurch auf den Träger 24 heruntergedrückt, dass die Arbeitsspindel 12 mit ihrer Stirnseite 42 von oben auf den Träger 24 zu fährt, wobei der Hohlschaftkegel 34 in die Werkzeugaufnahme 15 hineingelangt. Dabei drückt gleichzeitig die Stirnseite 42 von oben auf die beweglichen Backen 46, so dass der Werkzeughalter 16 aus dem Träger 24 freikommt. Die Arbeitsspindel fährt dann mit dem eingespannten Werkzeughalter 16 in Fig. 4 seitlich aus dem Träger 24 heraus.

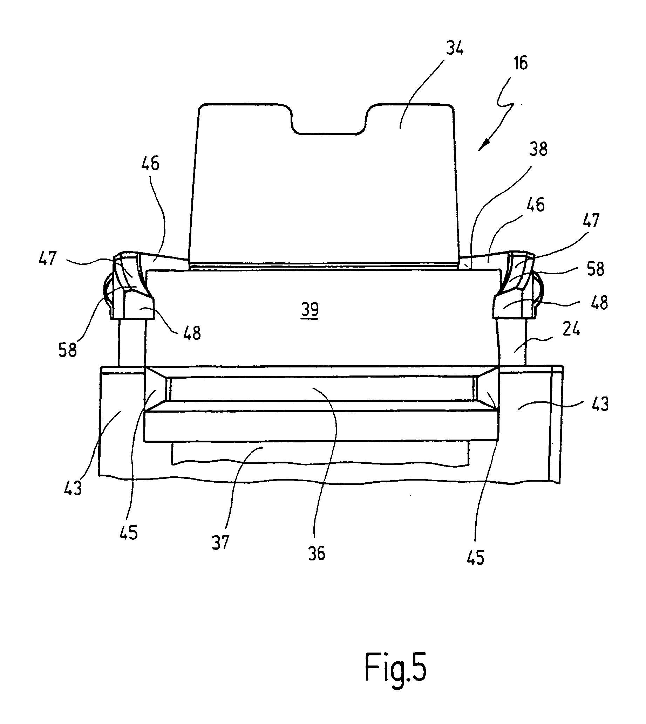

In Fig. 5 ist der Träger 24 in der in Fig. 3 gezeigten Schließstellung der beweglichen Backen 46 in einer Ansicht von links gezeigt. Es ist deutlich zu erkennen, dass die Spitzen 48 der vorderen Enden 47 um die Außenfläche 39 des Werkzeughalters 16 herumgreifen und diesen somit formschlüssig in dem Träger 24 halten.

In Fig. 5 ist ferner zu sehen, wie die feststehenden Backen 43 mit ihren inneren Seiten 45 in die Greifernut 36 eingreifen. Ferner ist zu erkennen, dass die vorderen Enden 47 in Längsrichtung nach oben eine Fläche 58 aufweisen, die aus der Zeichnung der Fig. 5 herausweisend nach unten auf den Träger zu geneigt verläuft.

Wenn nun eine Arbeitsspindel 12 mit eingesetztem Werkzeughalter 16 in Fig. 3 von links auf einen Träger 24 so zufährt, dass die feststehenden Backen 43 mit ihren inneren Seiten 45 in die Greifernut 36 einfädeln, gelangen die Flächen 58 unter die Stirnseite 42 der Arbeitsspindel 12a, 12b, und die Spitzen 48 werden nach unten auf den Träger 42 zu geschwenkt, wenn die Arbeitsspindel 12 den Werkzeughalter 16 weiter in die Öffnung 44 zwischen den feststehenden Backen 43 hineinschiebt.

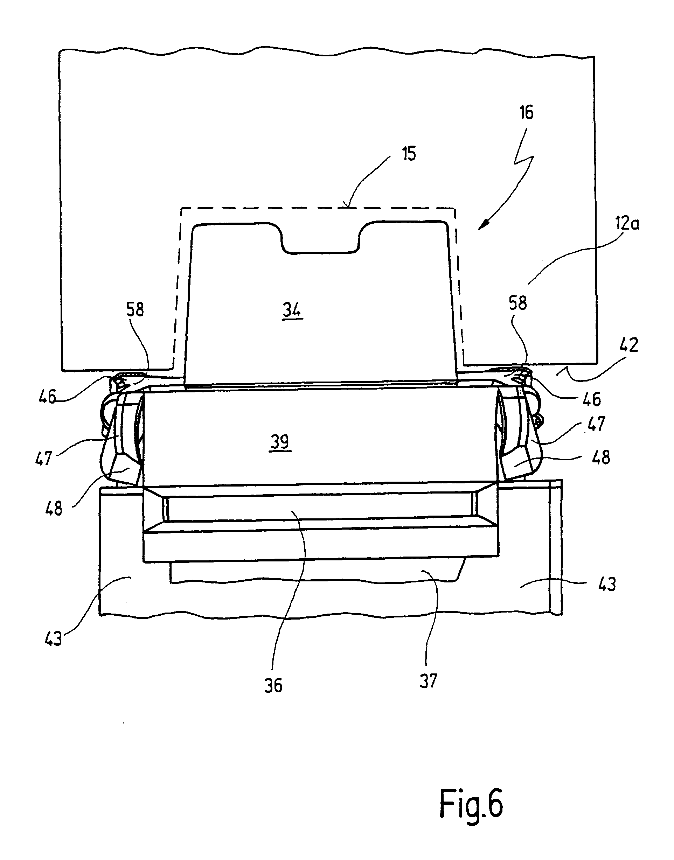

Dieser Zustand ist schematisch in Fig. 6 gezeigt, die eine Ansicht auf den Träger 24 mit in Spreizstellung befindlichen Backen 46 zeigt, also eine Draufsicht auf die Position gemäß Fig. 4, dort von links.

In Fig. 6 ist zu erkennen, dass die Arbeitsspindel 12a mit ihrer Stirnseite 42 auf die geneigte Fläche 58 der beweglichen Backen 46 drückt, so dass deren vordere Enden 47 nach unten auf den Träger 24 zu geschwenkt werden, so dass die Spitzen 48 zueinander einen Abstand aufweisen, der groß genug ist, um den Werkzeughalter 16 passieren zu lassen. Mit anderen Worten, der Formschluss zwischen den Spitzen 48 und der Außenfläche 39 ist aufgehoben.

Wenn in Fig. 6 jetzt die Arbeitsspindel 12a nach oben verfahren wird, schwenken die beweglichen Backen 46 in ihre in Fig. 5 gezeigte Schließstellung, so dass der Werkzeughalter 16 formschlüssig gehalten wird.

Die Spitzen 48 haben also in der Spreizstellung einen geringeren Abstand zu dem Träger 24 als in der Schließstellung.

Bei diesem Einsetzen eines von einer Arbeitsspindel 12a gehaltenen Werkzeughalters 16 in den Träger 24 gelangt die Arbeitsspindel 12a mit ihrer Stirnfläche 42 deshalb in Anlage mit der Fläche 58 der beweglichen Backen 46, weil diese Fläche 58 bei einem in den Träger 24 eingesetzten Werkzeugträger 16 über dessen Planfläche 38 nach oben übersteht. Dies ist auch bei einem Herausnehmen eines in einem Träger 24 gehaltenen Werkzeughalters 16 durch eine von oben auffahrende Arbeitsspindel 12a von Vorteil, denn auch in der in Fig. 5 gezeigten Schließstellung steht die Fläche 58 zumindest an ihrem hinteren Ende über die Außenkontur des Werkzeughalters 16, insbesondere über dessen Planfläche 38, über.

## Patentansprüche

1. Träger für eine Längsachse (41) aufweisende Werkzeughalter (16) einer Werkzeugmaschine (10), mit zumindest einer beweglichen Backe (46), die um eine Schwenkachse (52) zwischen ihrer Spreizstellung und ihrer Schließstellung verschwenkbar ist, in der sie einen in den Träger (24, 25, 33) eingesetzten Werkzeughalter (16) formschlüssig ergreift, wobei die Schwenkachse (52) quer zu der Längsachse (41) verläuft,
**dadurch gekennzeichnet, dass** die Schwenkachse (52) schräg zu einer Einführrichtung (101) verläuft, längs derer der Werkzeughalter (16) in den Träger (24) eingeschoben wird, derart, dass die zumindest eine bewegliche Backe (46) in der Spreizstellung mit ihren Spitzen (48) auf den Träger (24) zu geschwenkt ist.

2. Träger nach Anspruch 1, **dadurch gekennzeichnet, dass** die zumindest eine bewegliche Backe (46) in der Schließstellung mit ihrer Spitze (48) auf einer im Wesentlichen in Richtung der Längsachse (41) verlaufenden Außenfläche (39) des Werkzeughalters (16) aufliegt.

3. Träger nach Anspruch 1 oder 2, **dadurch gekennzeichnet, dass** die zumindest eine bewegliche Backe (46) federbelastet in ihre Schließstellung vorgespannt ist.

4. Träger nach einem der Ansprüche 1 bis 3, **dadurch gekennzeichnet, dass** die zumindest eine bewegliche Backe (46) bei in den Träger (24, 25, 33) eingesetztem Werkzeughalter (16) in Längsrichtung (41) über eine Außenkontur (38) des Werkzeughalters (16) übersteht.

5. Träger nach einem der Ansprüche 1 bis 4, **dadurch gekennzeichnet, dass** er zwei eine Öffnung (44) aufspannende, feststehende Backen (43) aufweist, von denen ein durch die Öffnung (44) seitlich in den Träger (24, 25, 33) eingesetzter Werkzeughalter (16) in Längsrichtung (41) formschlüssig gehalten ist.

6. Träger nach einem der Ansprüche 1 bis 5, **dadurch gekennzeichnet, dass** die zumindest eine bewegliche Backe (46) eine in Längsrichtung (41) nach oben weisende Fläche (58) aufweist, die auf den Träger (24, 25, 33) zu geneigt nach unten verläuft.

7. Verfahren zum Wechseln von Werkzeughaltern (16) in Trägern (24, 25, 33) einer Werkzeugmaschine (10), wobei jeder Träger (24, 25, 33) mit zumindest einer beweglichen Backe (46) versehen ist, die um eine Schwenkachse (52) zwischen ihrer Spreizstellung und ihrer Schließstellung verschwenkbar ist, in der sie einen in den Träger (24, 25, 33) längs einer Einführrichtung (101) eingesetzten Werkzeughalter (16) formschlüssig ergreift, **dadurch gekennzeichnet, daß** die Schwenkachse (52) schräg zu der Einführrichtung (101) verläuft, bei dem eine Arbeitsspindel (12a, 12b) an ihrer Stirnseite (42) auf die zumindest eine bewegliche Backe (46) drückt und diese in deren Spreizstellung verschwenkt, wobei die backe mit ihren Spitzen auf den Träger zu geschwenkt wird.

## Claims

1. Carrier for a tool holder (16) of a machine tool (10), said tool holder having a longitudinal axis (41), said carrier having at least one movable yaw (46) which can be pivoted about a pivot axis (52) between its expanded position and its closed position, which movable yaw grasps in its closed position in a form-fitting manner a tool holder (16) which is inserted into the carrier (24, 25, 33), whereby the pivot axis (52) runs transversely with respect to the longitudinal axis (41),
**characterized in that** the pivot axis (52) runs obliquely with respect to an insertion direction (101) along which said tool holder (16) is being inserted into the carrier (24), such, that in said expanded position said at least one movable yaw (46) is pivoted with its tips (48) towards said carrier (24).

2. The carrier according to claim 1, **characterized in that** in said closed position said at least one movable yaw (46) rests with its tip (48) on an outer face (39) of the tool holder (16), which face runs essentially in the direction of the longitudinal axis (41).

3. The carrier of claim 1 or claim 2, **characterized in that** said at least one movable yaw (46) is pre-stressed in a spring-loaded manner into its closed position.

4. The carrier of anyone of claims 1 through 3, **characterized in that** the at least one movable yaw (46) protrudes in the longitudinal direction (41) over an outer contour (38) of the tool holder (16), in case said tool holder (16) has been inserted into said carrier (24, 25, 33).

5. The carrier of anyone of claims 1 through 4, **characterized in that** it comprises two fixed yaws (43) which define an opening (44) and by which a tool holder (16) which is inserted laterally through the opening (44) into the carrier (24, 25, 33) is retained in a form-fitted manner in the longitudinal direction (41).

6. The carrier of anyone of claims 1 through 5, **characterized in that** said at least one movable yaw (46) has a face (58) which points upwards in the longitudinal direction (41) and runs in an inclined manner downwards towards the carrier (24, 25, 33).

7. Method for changing tool holders (16) in carriers (24, 25, 33) of a machine tool (10), whereby each carrier (24, 25, 33) is provided with at least one movable yaw (46) which can be pivoted between its expanded position and its closed position, whereby said movable yaw grasps a tool holder (16), which is inserted into a carrier (24, 25, 33), in a form-fitting manner when being in its closed position, **characterized in that** the pivot axis (52) runs obliquely to the insertion direction (101), whereby a working spindle (12a, 12b) at its end side (42) presses onto said at least one movable yaw (46) and pivots same into its expanded position, whereby the yaw is pivoted with its tip onto the carrier.

## Revendications

1. Support pour porte-outil (16) présentant un axe longitudinal (41) d'une machine-outil (10) avec au moins une mâchoire (46) mobile qui peut être pivotée autour d'un axe de pivotement (52) entre sa position d'écartement et sa position de fermeture, dans laquelle elle saisit par complémentarité de formes un porte-outil (16) inséré dans le support (24, 25, 33), l'axe de pivotement (52) s'étendant transversalement à l'axe longitudinal (41),
**caractérisé en ce que** l'axe de pivotement (52) s'étend en biais par rapport à un sens d'introduction (101), le long duquel le porte-outil (16) est inséré dans le support (24) de telle sorte que l'au moins une mâchoire (46) mobile soit pivotée vers le support (24) dans la position d'écartement avec ses pointes (48).

2. Support selon la revendication 1, **caractérisé en ce que** l'au moins une mâchoire (46) mobile repose dans la position de fermeture avec sa pointe (48) sur une surface extérieure (39) du porte-outil (16) s'étendant sensiblement vers l'axe longitudinal (41).

3. Support selon la revendication 1 ou 2, **caractérisé en ce que** l'au moins une mâchoire (46) mobile est précontrainte de manière sollicitée par ressort dans sa position de fermeture.

4. Support selon l'une quelconque des revendications 1 à 3, **caractérisé en ce que** l'au moins une mâchoire (46) mobile dépasse d'un contour extérieur (38) du porte-outil (16) dans le sens longitudinal (41) lorsque le porte-outil (16) est inséré dans le support (24, 25, 33).

5. Support selon l'une quelconque des revendications 1 à 4, **caractérisé en ce qu'**il présente deux mâchoires (43) fixes, définissant une ouverture (44), par lesquelles est maintenu par complémentarité de formes un porte-outil (16) inséré par l'ouverture (44) latéralement dans le support (24, 25, 33) dans le sens longitudinal (41).

6. Support selon l'une quelconque des revendications 1 à 5, **caractérisé en ce que** l'au moins une mâchoire (46) mobile présente une surface (58) tournée vers le haut dans le sens longitudinal (41), laquelle s'étend de manière inclinée vers le bas vers le support (24, 25, 33).

7. Procédé de changement de porte-outils (16) dans des supports (24, 25, 33) d'une machine-outil (10), chaque support (24, 25, 33) étant pourvu d'au moins une mâchoire (46) mobile qui peut être pivotée autour d'un axe de pivotement (52) entre sa position d'écartement et sa position de fermeture, dans laquelle elle saisit par complémentarité de formes un porte-outil (16) inséré dans le support (24, 25, 33) le long d'un sens d'introduction (101), **caractérisé en ce que** l'axe de pivotement (52) s'étend en biais par rapport au sens d'introduction (101), pour lequel une broche de travail (12a, 12b) presse sur sa face frontale (42) l'au moins une mâchoire (46) mobile et la pivote dans sa position d'écartement, la mâchoire avec ses pointes étant pivotée vers le support.
